# EUROPEAN PATENT APPLICATION

(11) **EP 1 619 852 A1**
(43) Date of publication of application: **25.01.2006**
(21) Application number: 04291843.3
(22) Date of filing: 19.07.2004
(51) Int. Cl.: H04L 29/06

(54) **Method of performing a communication service**

(71) Applicant: ALCATEL, 75008 Paris (FR)
(72) Inventor: Kopp, Dieter, 75428 Illingen (DE)
(74) Representative: LOUIS, PÖHLAU, LOHRENTZ

(57) **Abstract**

The invention concerns a method of performing an IP based communication service in a communication network (1), as well as push-to-talk service (4) and a terminal for executing the method. A terminal (31) transmits a push-to-talk call request to the push-to-talk server (4). The push-to-talk server (4) establishes an IP based communication channel between the calling terminal (31) and at least one called terminal (32 to 34). A notification message is transmitted to the at least one called terminal, wherein the notification message contains notification information specified by the calling terminal (31).

## Description

The present invention relates to a method of performing an IP based communication service in a wireless communication network, to a wireless terminal for communicating via a wireless communication network and to a server for providing a push-to-talk service in a wireless communication network.

Today, cellular radio networks are widely used by private and business users. Such networks typically provide a full duplex point-to-point voice communication service. Enhanced cellular phones are equipped with additional functionalities to support the transfer of data traffic via cellular radio networks. Service as General Packet Radio Service (= GPRS) supports the transfer of packet switched data through the cellular radio network.

On the other hand, private land mobile radio services (= PLMRS) are used by user groups such as business and public service organizations for a wide range of operations. For example, such services are used for activity coordination in the field of building maintenance, security or medical services. All users of a common group in a PLMRS system share the same frequency channel. The service provides a simplex, not a duplex voice communication between the users of the group. The same frequency channel is used for both directions of conversation, with a push-to-talk button being used to activate the transmitter when a user wishes to call another user or response within a conversation. These services provide a "push-to-talk" radio service wherein a group of users are linked via a shared communication medium and the right to talk is granted by a "push-to-talk button".

It is now the object of the present invention to improve the emulation of a push-to-talk communication service by enhanced wireless communication systems.

The object of the present invention is achieved by a method of performing an IP based communication service in a communication network, wherein the method comprises the steps of: transmitting a push-to-talk call request from a calling terminal to a push-to-talk server; establishing an IP based communication channel between the calling terminal and at least one called terminal; and transmitting a notification message to the at least one called terminal, the notification message containing notification information specified by the calling terminal. The object of the present invention is further achieved by a terminal for communicating via a communication network, wherein the terminal comprises a push-to-talk client having means for signaling a push-to-talk call request to a push-to-talk server, the push-to-talk call request requesting the establishment of a communication channel between the terminal and at least one called terminal, means for specifying notification information which has to be transmitted within a notification message to the at least one called terminal and means for transmitting and receiving streaming information via IP based communication channels established through the push-to-talk server. The object of the present invention is further achieved by a server for providing a push-to-talk service within a communication network, wherein the server comprises a call control unit adapted to establish an IP based communication channel between a calling and at least one called terminal based on a push-to-talk call request received from the calling terminal and to transmit a notification message to the at least one called terminal, the notification message containing notification information specified by the calling terminal.

Accordingly, the invention proposes to emulate an IP based push-to-talk service, wherein the calling party defines notification information, for example a specific sound or picture etc., transmits this notification information in real-time to the called party where it is played or shown to the called party to notify the called party about the calling party's intention to start a communication.

The invention enhancing the capabilities of existing wireless communication networks and provides an attractive group of new push-to-talk services which enables the members of a push-to-talk group to establish an application context and enhance the personalization of the push-to-talk service. Further, it improves the attrativeness and effectiveness of push-to-talk dialogues, improve the attraction of such half-duplex traffic applications and thereby improves the efficiency of the wireless communication network.

Further advantages are achieved by the embodiments of the invention indicated by the dependent claims.

According to a preferred embodiment of the invention, the notification information comprises audio information defined by the calling terminal to be output as notification to the called party. Such audio information are, for example, ringing sound or any other kind of sound defined or created by the calling party. This sound is output via a loudspeaker of the called terminal to indicate the activation of the "push-to-talk button" by a specific calling party. Preferably, the push-to-talk server coordinates the definition of notification information by members of a push-to-talk group to ensure that each individual sound is uniquely assigned to a member of a push-to-talk group. Thereby, the notification information may be used as unique identifier at the respective member of the push-to-talk group.

According to a further embodiment of the invention, the notification information comprises graphical information or video information defined by the calling terminal to be output as notification to the called part. The notification information contains, for example, a picture or video sequence transmitted and displayed to the called part for notification. Preferably, each individual picture or video sequence used by the members of a push-to-talk group is uniquely assigned to one of the members and plays the role of a unique identifier of the respective member of the push-to-talk group. Further, it is also possible to transmit a notification message containing both, audio and graphical and/or video information.

Preferably, the notification information comprises a media file transmitted via IP-packets (IP = Internet Protocol) to the at least one called terminal and automatically played by the at least one called terminal after receipt. Further, it is possible to transmit the notification information as part of a media stream transmitted via a RTP streaming bearer (RTP = Real Time Protocol) to the called parties.

According to a preferred embodiment of the invention, the notification information comprises information about the subject of a call. That means, the notification information may not only include information about the identity of the calling party, but may also contain information about the subject of the intended talk. For example, the subject is indicated by a specific text or pictogram contained in the notification information and displayed by the called terminals.

Preferably, the calling terminal transfers the notification information to the push-to-talk server and the push-to-talk server transmits that notification as message to the at least one called terminal. It is possible that the push-to-talk server creates the notification message based on the notification information received from the calling terminal. Alternatively, the calling terminal creates the notification message and transmits the notification message directly or via the push-to-talk server to the at least one called terminal.

According to a further preferred embodiment of the invention, notification information assigned to members of a push-to-talk group are stored at the push-to-talk server which automatically generates individual notification messages based on the stored notification information. Such approach makes it possible to centralize the creation and definition of notification messages at the push-to-talk server and use light weight terminals.

Preferably, the wireless terminals are equipped with a push-to-talk client having the capability to transmit and receive streaming information via IP based communication channels established through the push-to-talk server. For example, this push-to-talk client is capable to transmit and receive voice and/or video streams transferred via one or more IP based channels, for example via one ore more RTP bearer channels.

To initiate a talk, the users select the person or talk group they wish to talk from a phone book stored on the wireless terminal or at the push-to-talk server. Thereby, a user is in a position to define potential members of a push-to-talk group. Link channels are assigned between the initiating member of the push-to-talk group and the called members of the push-to-talk group, notification messages are transmitted through the wireless terminals of the called members which may decided by hand of the received notification message to join the push-to-talk group.

These as well as other features and advantages of the invention will be better appreciated by reading the following detailed description of presently preferred exemplary embodiments taking in conjunction with accompanying drawings of which:
- Fig. 1: is a block diagram which shows a wireless communication system with a push-to-talk server and a plurality of wireless terminals.
- Fig. 2: is a functional view exemplifying the execution of a method according to the present invention.

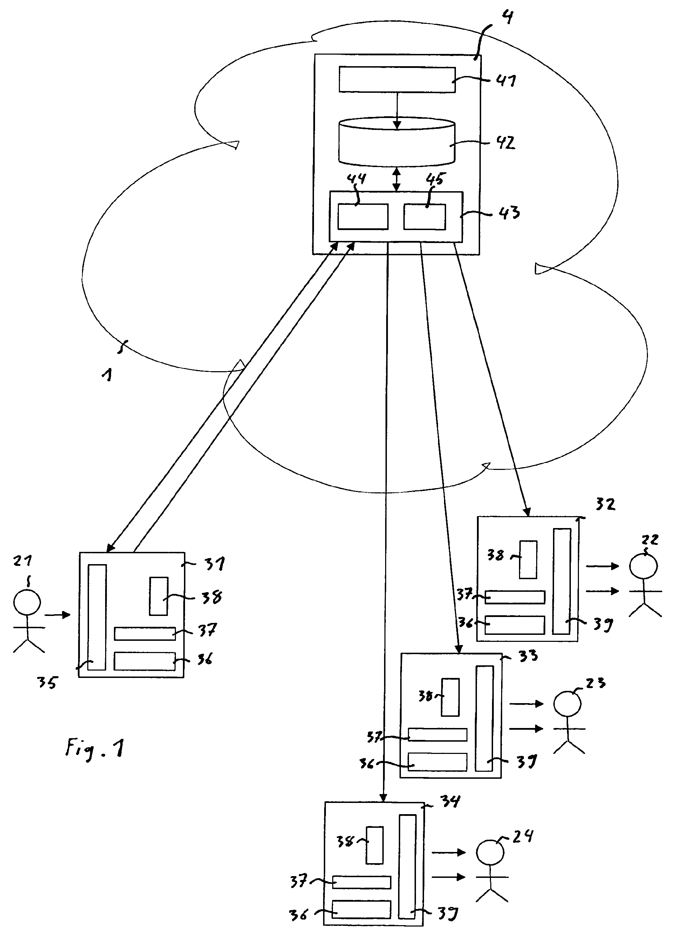

Fig. 1 shows a wireless communication network 1, a push-to-talk server 4 and a plurality of wireless terminals 31 to 34.

The wireless communication network 1 is a communication system which provides a wireless, IP based communication service. Preferably the communication network 1 is a cellular radio network, for example a GSM or a UMTS network (GSM = Global System for Mobile communication; UMTS = Universal Mobile Telecommunications System) which supports the transfer of packetized information via "always on" connections. For example, the wireless communication network 1 is a GSM network supporting a GPRS service (GPRS = General Packet Radio Service) which makes it possible for the wireless terminal 31 to 34 to exchange in addition to "a normal" voice traffic packet switch data traffic via the radio interface. But, it is also possible that the wireless communication network 1 is another kind of wireless communication network supporting an IP based packet switching service, for example a UMTS, EDGE, or 4G network.

According to a further embodiment of the invention, the wireless communication network 1 is formed by different sub-networks capable to exchange IP-based traffic via a radio interface. For example, such sub-networks are wireless LANs or different kinds of cellular radio networks.

The push-to-talk server 4 is constituted by one or several interlinked computers, a software platform and various application programs executed on the system platform provided by the aforementioned hard and software platform. The functionalities of the push-to-talk server 4 are performed by the execution of these software components by the hardware components of the push-to-talk server 4. From functional point of view, the push-to-talk server 4 comprises a call control unit 43, an administration unit 41 and a database 42.

The database 42 contains a subscriber data set for each individual user of the push-to-talk service provided by the push-to-talk server 4. Each subscriber data set contains contact data of the respective user, for example a network address and/or an IP address or a SIP address of a wireless terminal assigned to the respective user (SIP = Session Initiation Protocol). Further, the subscriber data set contains subscriber data specifying, for example, the name of the respective subscriber and a subscriber profile assigning the respective subscriber to one or more push-to-talk groups.

Optionally, the subscriber data set contains notification data specifying the contents of a notification message defined by the respective subscriber. For example, notification data contains an audio or a video file specifying a specific sound or a specific video sequence or links to a library of media files used to compose the respective notification.

Optionally, the subscriber data set contains authentication information used to check the access rights of wireless terminals while contacting the push-to-talk server 4.

The administration unit 41 provides an access interface to enrolled subscribers of the push-to-talk service which enables these subscribers to change an administrate their subscriber data stored in the database 42.

The call control unit 43 establishes IP based communication channels between the wireless terminals 31 to 34 based on a push-to-talk call request received from these terminals. Push-to-talk calls are one-way, one-to-one or one-to-many communications: While one person speaks the other person has to listen. The right to speak is granted by pressing a push-to-talk button on a first come - first serve basis. Upon detecting the actuation of a push-to-talk key, the terminal transmits a push-to-talk call request to the call control unit 43. The call control unit 43 establishes and reconfigures IP based communication channels between subscribers enrolled in the database 42 on a first come - first save basis preferably without awaiting the recipient's answer upon the establishment or reconfiguration of the communication channel.

The wireless terminals 31 to 34 are cellular phones which are equipped with additional functionalities to support - besides the "normal" cellular telephone service - a push-to-talk service similar to the aforementioned private land mobile radio services.

Each of the wireless terminals 31 to 34 is composed of an electronic circuit having a radio part and at least one microprocessor, as well as application programs executed by the at least one microprocessor and input and output means, for example a microphone, a loudspeaker, a keypad and a display. The functionalities of the wireless terminals 31 to 34 are performed by the interaction of these hardware and software components. From functional point of view, the mobile terminals 31 to 34 comprise an input unit 35, an output unit 39, a radio communication unit 36, a packet radio service unit 37 and a push-to-talk client 38.

The radio communication unit 36 represents the "normal" radio communication capabilities of a cellular phone and comprises, for example, the part of the wireless terminal 31 that handles the radio interface and the associated GSM protocol stack. The radio communication unit 36 provides the "normal" telephone service of a GSM or UMTS handset.

The packet radio service unit 37 represents the functionalities of the wireless terminal which support the exchange of packet-switched data through the wireless communication network 1. For example, the packet service unit comprises routines for handling the GPRS protocol stack. Accordingly the packet service unit 37 provides corresponding packet-transfer services to the push-to-talk client 38.

The push-to-talk client 38 handles the client's part of the push-to-talk service. If the user initiates a push-to-talk communication, it sends a corresponding push-to-talk call request to the push-to-talk server 4.

Further, the push-to-talk client 38 comprises functionalities to transfer media streams via an IP based communication network, e.g. functionalities to handle the RTP and the SIP protocol stacks. Further, it comprises corresponding media players to input/output audio and/or picture and/or media streams.

Further, it is possible that the terminals 31 to 34 are wired terminals connected with a communication network capable to transfer IP based media streams.

For example, users 21 to 24 are assigned to the wireless terminals 31 to 34. The users 21 to 24 are enrolled as subscribers of the push-to-talk service provided by the push-to-talk server 4 at the database 42. The users 22 to 24 have joined a common talk group and the membership of the terminals 32 to 34 has been registered in the database 42. Further, the users 21 to 24 are members of a push-to-talk group, for example representing the staff of a building maintenance service.

The user 21 selects person, talk group or push-to-talk group from a list of available persons, talk groups and push-to-talk groups displayed at the display of the wireless terminal 31. Preferably, the push-to-talk client 38 sends a calling message to the call control unit 43 of the push-to-talk server 4 and requests the submission of information about all or a part of the contact persons, talk groups and push-to-talk groups available for the user 4. But, it is possible that these data are stored in a personal phone book of the user 21 held by the wireless terminal 31. When the push-to-talk client 38 detects the selection of a person, a talk group or a push-to-talk group, it signals a corresponding push-to-talk call request to the call control unit 43 of the push-to-talk server 4. Further, the push-to-talk client 38 selects and transfers notification information to the call control unit 43 which has to be transmitted within a notification message to the selected person, talk group or push-to-talk group to be output as notification to the respective called party.

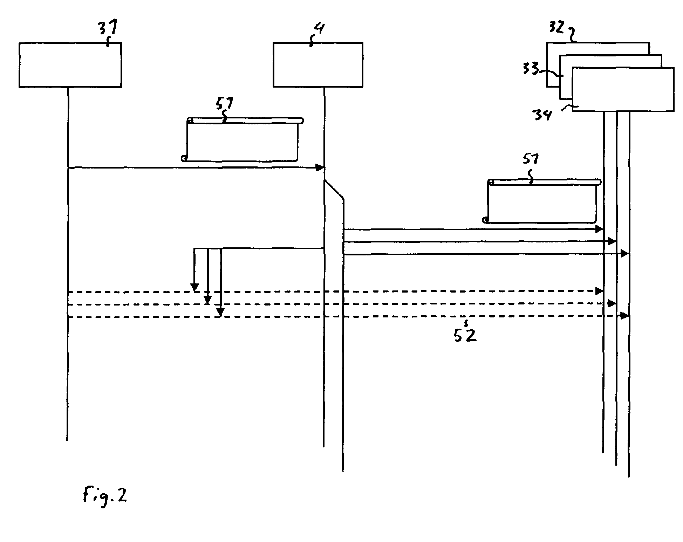

According to an embodiment of the invention exemplified by hand of Fig. 2, the push-to-talk client 38 of the wireless terminal 32 creates a notification message 51 which is in the following forwarded to the selected person, talk group or push-to-talk group. The notification message 51 contains notification information in form of an audio file and a picture file. The audio file encodes a user specific sound which is chosen by the user 21 and representing the identification of the user 21 towards the users 22 to 24. The picture file encodes information about the subject of the talk, which is e.g. indicated by a pictogram or a corresponding text message. Further, the picture file may contain a picture of the user 21 as individualized notification of a call request. The audio and/or video file incorporated in the notification message 51 is preferably stored in a database of the wireless terminal 31 and optionally adapted by the user 21 during the selection process.

When receiving a push-to-talk call request from the wireless terminal 31, the call control unit 43 initiates the establishment of an IP based communication channel between the wireless terminal 31 and the wireless terminals assigned to the selected person, talk group or push-to-talk group. The call control unit 43 accesses the database 42 and searches for the communication addresses, e.g. SIP addresses of the terminals assigned to the selected persons, talk groups or push-to-talk groups. For example, the user 21 selected the talk group joint by the users 22, 23 and 24. The call control unit 43 initiates via the SIP protocol (SIP = Session Initiation Protocol) the establishment of one-way streaming bearer channels between the wireless terminal 31 and the push-to-talk server 4 and between the push-to-talk server 4 and each of the wireless terminals 32 to 34. A bridge unit 45 of the call control unit 43 controls the forwarding and copying of media streams received via the incoming streaming bearer of this IP based communication channel towards the outgoing streaming bearer channels of this IP based communication channel. A notification unit 44 handles the transfer of the notification message 41 to the terminals 32 to 34. Preferably the notification unit 44 transmits the notification message 51 to the terminals 32 to 34 as soon as the call control unit 43 has identified the communication addresses of the clients corresponding to the selection of the user 21, i.e. before the call control unit 43 has finished the establishment of the streaming bearer channels. The notification unit 44 transmits the notification message 51 via an asynchrone packet service to the push-to-talk clients 38 of the terminals 32 to 34, which store the received audio and picture files and play or display the contents to the respective users 22, 23 and 24.

But, it is also possible that the notification unit 44 converts the notification message in a media stream and transfers this media stream via the established streaming bearer channel to each of the wireless terminals 32 to 34, where the respective push-to-talk client 38 outputs the received media streams as notification of a talk request to its corresponding user 22 to 24.

According to a further embodiment of the invention, the call control unit 43 initiates the establishment of direct streaming bearer channels 52 between the terminal 31 and the terminals 32 to 34, as indicated by Fig. 2.

Upon receiving the notification the users 22 to 24 have the option to accept the push-to-talk call, to refuse the push-to-talk call or to forward the invitation to another subscriber of the push-to-talk service. For example, the users 22 to 24 have to press a specific button to actively accept their participation in the talk. If the users 22 to 24 do not press this key within a predefined time frame since the outputting of the notification, the push-to-talk client 38 does not transfer the received media streams to the output unit 39 of the terminals 32 to 34 or sends a request message to the call control unit 43 which requests the release of the streaming bearer channel to the requesting wireless terminal.

If the user presses the acceptance button, the push-to-talk client 38 outputs the received media stream to the user 22.

If all of the users 22 to 24 accept their participation in the talk, the push-to-talk client 38 of the terminal 31 converts outgoing information received from a microphone of the terminal 31 to a corresponding media streamer, packetizes and transfers this media stream via a RTP streaming bearer to the push-to-talk server 4. The bridging unit 45 of the media server 4 copies the received RTP packets based on a UDP/IP/GPRS protocol stack (UDP = User Datagram Protocol) and transfers the packets via RTP streaming bearers to the push-to-talk clients 38 of the wireless terminals 32 to 34. The push-to-talk clients 38 output the received audio stream through the loudspeakers of the wireless terminals 32 to 34 to the users 22 to 24 which has in the following the option to press or push the push-to-talk key to speak.

## Claims

1. A method of performing an IP based communication service in a communication network (1), the method comprising the steps of:
transmitting a push-to-talk call request from a calling terminal (31) to a push-to-talk server (4);
establishing an IP based communication channel (52) between the calling terminal (31) and at least one called terminal (32, 33, 34); and
transmitting a notification message (51) to the at least one called terminal, the notification message (51) containing notification information specified by the calling terminal (31).

2. The method of claim 1,
**characterized in**
**that** the notification information (51) comprises audio information defined by the calling terminal (31) to be output as notification to the called party (22, 23. 24).

3. The method of claim 1,
**characterized in**
**that** the notification information (51) comprises graphical information or video information defined by the calling terminal (31) to be output as notification to the called party (22, 23, 24).

4. The method of claim 2 or claim 3,
**characterized in**
**that** the notification information comprises a media file automatically played by the at least one calling terminal after received.

5. The method of claim 1,
**characterized in**
**that** the notification information comprises information about the subject of the call.

6. The method of claim 1,
**characterized in**
**that** the method comprises the further steps of: transferring the notification information from the calling terminal (31) to the push-to-talk server (4); and transmitting the notification message (51) from the push-to-talk server (4) to the at least one called terminal (32, 33, 34).

7. The method of claim 1,
**characterized in**
**that** the method comprising the further step of transmitting the notification message from the calling terminal to the at least one called terminal.

8. The method of claim 1,
**characterized in**
**that** the method comprising the first steps of: storing notification information assigned to members of a push-to-talk group at the push-to-talk server (4); and automatically generating the notification message based on the store notification information (51).

9. A server (4) for providing a push-to-talk service in a communication network (1), the server (4) comprising a call control unit (43) for establishing an IP based communication channel (52) between a calling terminal (31) and at least one called terminal (32, 33, 34) based on a push-to-talk call request received from the calling terminal (31), and for transmitting a notification message (51) to the at least one called terminal (32, 33, 34), the notification message (51) containing notification information specified by the calling terminal (31).

10. A terminal (31, 32, 33, 34) for communicating via a communication network (1), the terminal (31, 32, 33, 34) comprising a push-to-talk client (38) adapted for signaling a push-to-talk call request to a push-to-talk server (4), the push-to-talk call request requesting the establishment of a communication channel (52) between the terminal (31) and at least one called terminal (32, 33, 34), for specifying notification information which has to be transmitted within a notification message (51) to the at least one called terminal, and for transmitting and receiving streaming information via IP based communication channels (52) established through the push-to-talk server (4).
